# EUROPÄISCHE PATENTSCHRIFT

(11) **EP 1 167 821 B1**
(45) Veröffentlichungstag und Bekanntmachung des Hinweises auf die Patenterteilung: **11.02.2004**
(21) Anmeldenummer: 01125227.7
(22) Anmeldetag: 03.11.1997
(51) Int. Cl.: F16H 1/22, F16H 25/20, H02K 7/06, H02K 7/116, H02K 16/00, H02K 11/00

(54) **Einrichtung zur Erzeugung einer Längsbewegung und/oder einer Drehbewegung**
Arrangement for producing a rotary or a linear movement
Dispositif pour la production d'un mouvement rotatif ou linéaire

(43) Veröffentlichungstag der Anmeldung: 02.01.2002
(62) Teilanmeldung aus: 97119194.5
(73) Patentinhaber: HONEYWELL AG, 63067 Offenbach am Main (DE)
(72) Erfinder: Palatzky, Roland, Dipl.-Ing., 86356 Neussaes (DE)
(74) Vertreter: Torggler, Paul Norbert, Dr.

(56) Entgegenhaltungen:
- DE-A- 3 544 669
- US-A- 4 607 180
- US-A- 5 444 348
- PATENT ABSTRACTS OF JAPAN vol. 015, no. 029 (E-1026), 23. Januar 1991 (1991-01-23) -& JP 02 273050 A (HINO MOTORS LTD), 7. November 1990 (1990-11-07)

## Beschreibung

Die Erfindung betrifft eine Einrichtung zur Erzeugung einer Längsbewegung und/oder einer Drehbewegung, mit zwei oder mehreren, insbesondere vier, Elektromotoren, deren Motorwellen Ritzel tragen, die direkt in die Außenverzahnung eines gemeinsamen Sonnenrades eingreifen und dieses antreiben.

Solche Einrichtungen werden zum Antrieb der verschiedensten Bauteile, beispielsweise in der Luftfahrt, eingesetzt und häufig als "Aktuatoren" bezeichnet. Insbesondere beim Einsatz in der Luftfahrt, also in Flugzeugen, ist es aus sicherheitstechnischen Gründen günstig, den Aktuator so auszuführen, daß bei Auftreten eines einfachen mechanischen Fehlers (beispielsweise Versagen, Bruch oder Verlieren eines Bauteiles) nicht ein Ausfall des gesamten Aktuators folgt. Die Schrift US-A-5 444 348 zeigt die Merkmale des Oberbegriffs des unabhängigen Anspruchs 1.

Bekannte elektromechanische Aktuatoren führen z. B. zwei Elektromotore auf ein Differentialgetriebe, das dann Längs- oder Drehbewegungen erzeugt. Solche Differentialgetriebe sind jedoch sehr aufwendig und teuer.

Darüber hinaus ist es bei den bekannten gattungsgemäßen Einrichtungen nicht möglich, die Elektromotoren schon präventiv während des Normalbetriebs auf mögliche Betriebsstörungen hin zu überwachen, um diese rechtzeitig erkennen zu können.

Aufgabe der Erfindung ist es daher, eine möglichst ausfallsichere Einrichtung der eingangs genannten Gattung zu schaffen, bei der eine entsprechende Überwachung der Elektromotoren möglich ist.

Erfindungsgemäß wird dies dadurch erreicht, daß einer der Elektromotoren abwechselnd als Generator betrieben wird und die erzeugten Stromsignale einer Überwachungsvorrichtung zuführbar sind.

Damit ist es möglich, nicht funktionierende Elektromotore vorzeitig zu erkennen. Dabei werden die kleineren Elektromotoren (beispielsweise vier) so dimensioniert, daß bereits weniger als alle (beispielsweise drei) ausreichend sind, um die Nennlast zu bringen. Zumindest ein Motor kann abwechselnd durch die Steuerung als Generator betrieben werden und dadurch überwacht werden. Wenn dieser Motor als Generator nicht mehr einwandfrei funktioniert, kann auf einen Fehler des Motors geschlossen werden. Dies führt durch die Tatsache, daß ohnehin mehrere Motoren zum Einsatz kommen, noch nicht zum Ausfall der gesamten Baugruppe, erlaubt aber eine frühzeitige Fehlererkennung.

Gemäß einer günstigen Variante der Erfindung ist es darüber hinaus zur Erhöhung der Ausfallsicherheit vorgesehen, daß die Motorwellen jeweils ein Ritzel mit räumlich getrennten Verzahnungen tragen, wobei die Verzahnung jedes Ritzels jeweils in eine gesonderte Sonnenrad-Verzahnung am Sonnenrad eingreifen.

Die Verwendung eines von mehreren Ritzeln angetriebenen gemeinsamen Sonnenrades erlaubt eine verhältnismäßig einfache Konstruktion. Bei Sonnenrädern und Ritzeln mit nur einer Verzahnung besteht jedoch die Gefahr, daß bei Bruch eines Ritzels die gesamte Sonnenrad-Verzahnung zerstört wird und damit der Antrieb lahmgelegt wird. Gemäß der Erfindung weist nun jedes Ritzel zumindest zwei räumlich getrennte Verzahnungen auf, die in gesonderte Sonnenrad-Verzahnungen am Sonnenrad eingreifen. Damit ist also der Kraftübertragungsweg von der Motorwelle auf das Sonnenrad zumindest in doppelter Ausführung vorhanden, sodaß bei Ausfall des einen Übertragungsweges immer noch zumindest ein weiterer zur Verfügung steht.

Die Ritzel können jeweils einstückig ausgeführt sein, wobei die zwei gesonderten Verzahnungen in axialem Abstand geometrisch getrennt am länglichen Ritzel ausgebildet sind. Es besteht aber natürlich auch die Möglichkeit, daß das Ritzel aus zwei Einzelritzeln aufgebaut ist, die beispielsweise verdrehsicher auf einer gemeinsamen Welle oder auf der Motorwelle sitzen. Auch das Sonnenrad kann gemäß einer bevorzugten Ausführungsform aus mindestens zwei gesonderten, miteinander verbundenen Teilen bestehen, wobei die Sonnenrad-Verzahnungen an verschiedenen Teilen des Sonnenrades ausgebildet oder angebracht sind, um die Ausfallsicherheit zu erhöhen.

Der so geschaffene Aktuator kann direkt Drehbewegungen aus der Drehbewegung des Sonnenrades erzeugen. Es ist jedoch auch möglich, Längsbewegungen zu erzeugen, wozu vorzugsweise vorgesehen ist, daß das Sonnenrad eine Spindelmutter trägt, welche auf eine Gewindespindel wirkt und diese bei Drehung der Spindelmutter in eine Längsbewegung versetzt.

Damit bei Blockieren eines Motors die Ritzel das Sonnenrad nicht zerstören können, ist gemäß einer weiteren Variante der Erfindung vorgesehen, daß die Ritzel auf der Motorwelle durch Überlast-Steuerelemente, vorzugsweise Scherstifte, befestigt sind.

Bei Blockieren eines Motors scheren die übrigen Motoren über das Sonnenrad den Scherstift ab und die Ritzelwelle des blockierenden Motors kann sich frei drehen und blockiert somit nicht den gesamten Antrieb.

Um bei Bruch eines Wälz- oder Kugellagers für das Sonnenrad eine Notfunktion zu ermöglichen, sind Not-Gleitlager vorgesehen, die bei Versagen des Wälz- oder Kugellagers das Sonnenrad, vorzugsweise in axialer Richtung, führen.

Die Gewindespindel des Spindelantriebs ist vorzugsweise gemäß einer weiteren Variante der Erfindung zwei- oder mehrteilig ausgeführt, wobei die beiden Teile koaxial angeordnet und miteinander mechanisch verbunden sind. Damit ist sichergestellt, daß bei Ausfall des einen oder anderen Gewindespindelteiles immer noch der andere die Funktion der gesamten Anordnung sicherstellt.

Weitere Vorteile und Einzelheiten der Erfindung werden anhand der nachfolgenden Figurenbeschreibung näher erläutert.

Die Fig. 1 zeigt einen schematischen Längsschnitt durch ein Ausführungsbeispiel der erfindungsgemäßen Einrichtung,
die Fig. 2 zeigt einen Schnitt gemäß der Linie A-A der Fig. 1,
die Fig. 3 zeigt einen Schnitt gemäß der Linie B-B der Fig. 1.

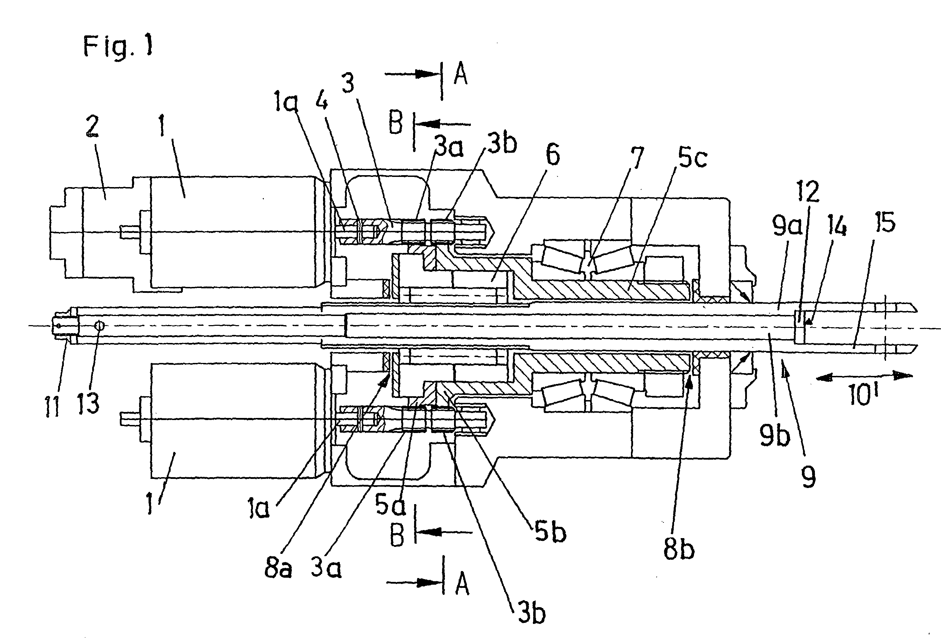

Die in Fig. 1 dargestellte Einrichtung dient zur Erzeugung einer Längsbewegung in Richtung des Doppelpfeiles 10 aus einer Drehbewegung von vier kleinen Elektromotoren 1. Die gesamte Einrichtung bzw. Aktuator ist günstigerweise in einem nicht näher dargestellten Gehäuse untergebracht. Die elektrische Steuerung für die Motoren 1 befindet sich vorteilhafterweise außerhalb des Gehäuses und ist ebenfalls nicht näher dargestellt.

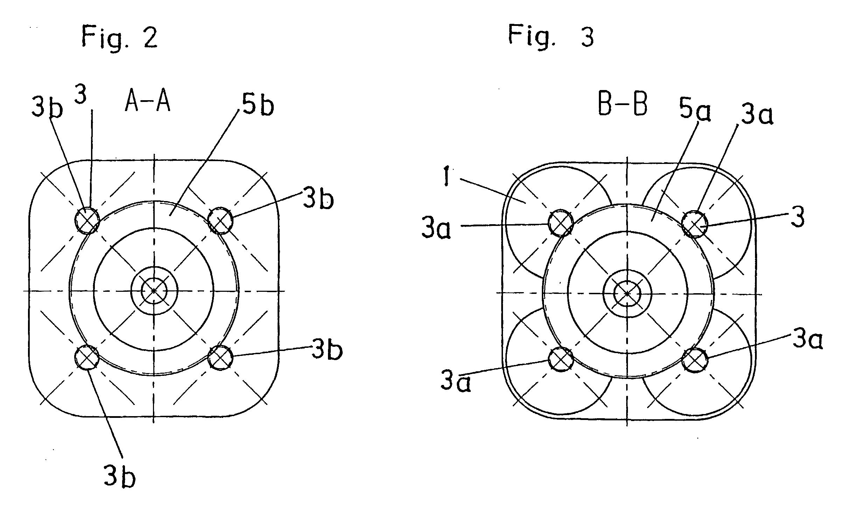

Die vier kleinen Elektromotoren, welche in den vier Quadranten um das zweiteilige Sonnenrad 5a, 5b herum angeordnet sind - wie dies Fig. 3 zeigt - treiben jeweils eine Motorwelle 1 a an. Wie bereits erwähnt, können die Motoren erfindungsgemäß durch die Steuerung so betrieben werden, daß jeweils nur drei Motoren antreiben, während der vierte Motor als Generator betrieben wird und in einer Überwachungsvorrichtung dessen Stromsignale ausgewertet werden.

Außerdem ist die Hälfte der Motoren (im vorliegenden Fall zwei) mit einer elektromagnetischen Bremse 2 ausgerüstet, die im stromlosen Zustand bremsen. Diese Bremsen haben die Aufgabe, in den Endlagen die Last sicher zu halten.

Die Motorwelle 1a jedes Elektromotors 1 trägt jeweils ein längliches Ritzel, das zwei räumlich getrennte Verzahnungen 3a und 3b mit axialem Abstand zueinander aufweist. Diese Verzahnungen 3a und 3b greifen in gesonderte Sonnenrad-Verzahnungen am zweiteiligen Sonnenrad 5a und 5b ein, wie dies die Fig. 1 bis 3 zeigen. Es ist zwischen Sonnenrad und Ritzel kein Zwischengetriebe vorgesehen. Die Ritzel 3 sind jeweils einstückig ausgeführt und weisen einen länglichen Grundkörper auf, auf dem die Verzahnungen 3a und 3b einstückig ausgebildet sind.

Das Sonnenrad trägt eine Spindelmutter 6 eines Rollengewindetriebes. Ein Teil des Sonnenrades ist am vorderen Ende der Spindelmutter befestigt, ein anderer Teil am hinteren Ende der Spindelmutter. Bei Versagen eines Sonnenradteiles übernimmt der andere Teil die komplette Last. Die Spindelmutter selbst ist ebenfalls zweiteilig ausgeführt und wirkt über eine größere Anzahl von Gewinderollen auf die Gewindespindel, wobei solche Spindelmuttern handelsüblich erhältlich sind. Ein Abschnitt 5c des Sonnenrades ist als Lagertopf ausgebildet, der über ein Wälz- oder Kugellager 7 drehbar gelagert ist. Bei Versagen dieses Lagertopfes bzw. des Wälzlagers 7 fällt die Antriebsgruppe in die Not-Gleitlager 8a bzw. 8b, die das Sonnenrad 5a, 5b in axialer Richtung führen. Der Antrieb bleibt dadurch funktionsfähig.

Die Gewindespindel ist zweiteilig ausgeführt. Die äußere Gewindestange 9a ist hohl gebohrt. Ein Lastbolzen 9b ist als zweiter Teil in diese Gewindestange eingesteckt und darin mittels der Mutter 11 verspannt, wobei am gegenüberliegenden Ende der Kopf 12 satt anliegt. Auf einer Seite erfolgt die Verdrehsicherung der beiden Gewindespindelteile 9a und 9b über einen durchgesteckten Stift 13. Auf der anderen Seite erfolgt diese verdrehsichere Verbindung dadurch, daß der Kopf 12 einen nichtkreisrunden Querschnitt aufweist und verdrehsicher im Bereich des Bodens 14 der Betätigungsgabel 15 der Gewindespindel anliegt. Beide Gewindespindelteile können beim Versagen des anderen Gewindespindelteiles Drehmomente und Zug/Druck-Kräfte vollständig übertragen.

Wie bereits erwähnt, ist das Gehäuse nicht dargestellt, es kann sich dabei um ein mehrteiliges Gehäuse handeln, das bis auf die elektrische Steuerung alle Baugruppen enthält. Mehrere Zuganker des Gehäuses können die Gehäuselasten übertragen, sodaß bei Versagen eines der Zuganker samt Verschraubung kein Ausfall der ganzen Einheit eintritt.

Nicht dargestellte verstellbare fehlerüberwachte Sensoren können den Aktuator-Hub bestimmen. Die Versorgungsleitungen von Motoren, Bremsen und Sensoren werden über zwei oder mehrere Filterplatinen auf zwei oder mehrere unterschiedliche Gerätestecker verteilt, sodaß auch in diesem Bereich eine hohe Ausfallsicherheit gewährleistet ist.

## Patentansprüche

1. Einrichtung zur Erzeugung einer Längsbewegung und/oder einer Drehbewegung, mit zwei oder mehreren, insbesondere vier, Elektromotoren, deren Motorwellen Ritzel tragen, die direkt in die Außenverzahnung eines gemeinsamen Sonnenrades eingreifen und dieses antreiben, **dadurch gekennzeichnet, daß** einer der Elektromotoren (1) abwechselnd als Generator betrieben wird und die erzeugten Stromsignale einer Überwachungsvorrichtung zuführbar sind.

2. Einrichtung nach Anspruch 1, **dadurch gekennzeichnet, daß** ein Teil, vorzugsweise die Hälfte der Elektromotoren (1), mit einer - vorzugsweise im stromlosen Zustand bremsenden - elektromagnetischen Bremse (2) ausgerüstet ist.

## Claims

1. Arrangement for producing a linear movement and/or a rotary movement with two or more in particular four electric motors which are provided with motor shafts which carry pinions which directly mesh with the external tooththing of a common sun wheel which they drive, **characterised in that** one of the electric motors (1) is alternatively operated as a generator and the produced electric signals can be supplied to a monitoring device.

2. Arrangement as claimed in claim 1, **characterised in that** a part, preferably half of the electric motors (1) are provided with an electromagnetic brake (2) which preferably brakes in the absence of a current.

## Revendications

1. Dispositif pour produire un mouvement longitudinal et/ou un mouvement rotatif, avec deux moteurs électriques ou plus, notamment quatre, dont les axes de moteur portent des pignons qui s'engrènent directement dans la denture extérieure d'un planétaire commun et entraînent celui-ci, **caractérisé en ce que** l'un des moteurs électriques (1) fonctionne en alternance comme générateur et les signaux électriques générés sont aptes à être transmis à un dispositif de surveillance.

2. Dispositif selon la revendication 1, **caractérisé en ce qu'**une partie, de préférence la moitié des moteurs électriques (1) sont équipés d'un frein électromagnétique (2) - de préférence qui freine dans l'état d'absence de courant.
